# EUROPÄISCHE PATENTSCHRIFT

(11) **EP 0 826 115 B1**
(45) Veröffentlichungstag und Bekanntmachung des Hinweises auf die Patenterteilung: **01.12.1999**
(21) Anmeldenummer: 96916050.6
(22) Anmeldetag: 13.05.1996
(51) Int. Cl.: F16D 65/16

(54) **ZUSPANNVORRICHTUNG EINER SCHEIBENBREMSE**
DISK BRAKE APPLICATION DEVICE
DISPOSITIF D'APPLICATION DE FREINS A DISQUES

(30) Priorität: 15.05.1995 DE 29508001 U; 26.06.1995 DE 29510331 U
(43) Veröffentlichungstag der Anmeldung: 04.03.1998
(73) Patentinhaber: Meritor Automotive, Inc., Troy, Michigan 48084 (US)
(72) Erfinder: KNOOP, Dietmar, D-56218 Mülheim-Kärlich (DE); GIERING, Wilfried, D-56743 Mendig (DE); HOLL, Franz-Helmut, D-56869 Mastershausen (DE)
(74) Vertreter: Beyer, Andreas, Dr.
(86) Internationale Anmeldenummer: EP9602036
(87) Internationale Veröffentlichungsnummer: WO9636819

(56) Entgegenhaltungen:
- EP-A- 0 291 071
- EP-A- 0 589 206
- EP-A- 0 648 952

## Beschreibung

Die Erfindung betrifft eine Zuspannvorrichtung einer Scheibenbremse, insbesondere Schwimmsattel- oder Schwimmrahmen-Teilbelagscheibenbremse für Lastkraftwagen oder Omnibusse, mit mindestens einem Stößel, der in Richtung einer Stößelachse verschiebbar ist, um einen Bremsbelag an eine Bremsscheibe anzulegen, mindestens einem Exzenter, der zur Bremsbetätigung um eine Querachse drehbar und in mindestens einem Wälzlager gelagert ist, und einem am Exzenter mittels einer Lagerschale gelagerten Wälzkörper zum Übertragen von Betätigungskräften auf den Stößel.

Eine solche Zuspannvorrichtung ist aus der DE 42 12 406 A1 bekannt.

Damit der wälzgelagerte Exzenter sich möglichst verschleißfrei drehen kann, ist es erforderlich, daß der Käfig, in dem die Wälzkörper des Wälzlagers gehalten sind, die Drehbewegung des Exzenters mitmacht und nicht bereits vor einem Abschluß der Drehbewegung des Exzenters in irgendeiner Weise festgelegt ist. Zu einer solchen Festlegung kann es z.B. dann kommen, wenn der Drehwinkel, den der Käfig des Wälzlagers durchlaufen kann, begrenzt ist, beispielsweise durch Anschläge. Stößt der Käfig gegen einen Anschag, bevor die Drehbewegung des Exzenters abgeschlossen ist, kommt es zu einer verschleißträchtigen Gleitreibung zwischen den Oberflächen der Wälzkörper und der wälzgelagerten Exzenteroberfläche. Bei in halbschalenförmigen Wälzlagern gelagerten Exzentern wurde festgestellt, daß der Drehwinkel des Exzenters beim Betätigen der Zuspannvorrichtung größer sein kann als beim Lösen der Bremse, so daß es dazu kommt, daß der Käfig des Wälzlagers bei einer erneuten Bremsbetätigung der Drehbewegung des Exzenters nicht mehr vollständig folgen kann.

Der Erfindung liegt die Aufgabe zugrunde, eine gattungsgemäße Zuspannvorrichtung so weiterzubilden, daß die genannten verschleißträchtigen Zustände nicht mehr auftreten können. Zugleich sollen der konstruktive Aufbau und der Zusammenbau einer gattungsgemäßen Zuspannvorrichtung vereinfacht werden.

Diese Aufgabe ist erfindungsgemäß dadurch gelöst, daß die Lagerschale, in der der Wälzkörper am Exzenter gelagert ist, einen sich bezüglich der Querachse des Exzenters zumindest annähernd radial nach außen erstreckenden Fortsatz aufweist, der für einen Eingriff mit einem Käfig des Wälzlager ausgebildet ist und der den Käfig beim Lösen der Bremse in eine definierte Ausgangslage zurückstellen kann. Erreicht der Wälzlagerkäfig diese Ausgangslage beim Lösen der Bremse, d.h. beim Zurückdrehen des Exzenters, nicht von alleine, kommt es erfindungsgemäß zu einer Zwangskopplung zwischen dem radialen Fortsatz der Lagerschale und zumindest einem Käfig des Wälzlagers, wodurch der Käfig des Wälzlagers unabhängig davon, ob der Drehwinkel des Exzenters beim Lösen kleiner ist als beim Betätigen der Bremse, in eine definierte Ausgangslage zurückgestellt wird, aus der heraus es ihm möglich ist, einer anschließenden Drehbewegung des Exzenters im Rahmen einer erneuten Bremsbetätigung vollständig zu folgen. Es sei angemerkt, daß die beschriebenen Wegdifferenzen des Wälzlagerkäfigs, die zwischen einer Bewegung in Betätigungsrichtung und einer Bewegung in Löserichtung auftreten können, sehr klein sind und oft nur im Bereich einiger weniger tausendstel Millimeter liegen. Jedoch summieren sich auch solche geringen Wegdifferenzen bei den vielen tausend Betätigungsvorgängen, die eine Bremse im praktischen Betrieb durchläuft, zu einer erheblichen Lagerverschiebung, die aus den oben erwähnten Gründen unerwünscht ist.

Wenn das Wälzlager, in dem der Exzenter gelagert ist, mehrere Käfige aufweist, dann ist der sich radial nach außen erstreckende Fortsatz der Lagerschale erfindungsgemäß bevorzugt so ausgebildet, daß er mit den mehreren nebeneinander angeordneten Käfigen des Wälzlagers in Eingriff treten kann, um alle Käfige eines Wälzlagers gemeinsam in die definierte Ausgangslage zurückzustellen. Alternativ können die nebeneinander angeordneten Käfige aber auch miteinander gekoppelt sein, wobei es dann ausreicht, wenn der radiale Fortsatz der Lagerschale mit nur einem der Käfige in Eingriff tritt. Ist der Exzenter in mehreren Wälzlagern gelagert, muß dafür gesorgt werden, daß jedes Wälzlager in die definierte Ausgangslage zurückgestellt wird. Dies läßt sich beispielsweise durch mehrere radial nach außen ragende Fortsätze erreichen, die an einer Lagerschale ausgebildet sind, oder es sind mehrere Lagerschalen vorhanden, die je einen oder mehrere radiale Fortsätze aufweisen.

Gemäß einer bevorzugten Ausführungsform der erfindungsgemäßen Zuspannvorrichtung ist das Wälzlager zylindersektorförmig und der radiale Fortsatz der Lagerschale tritt beim Lösen der Bremse mit einer freien Längskante des oder der Wälzlagerkäfige in Eingriff.

Vorteilhaft ist das Wälzlager, welches den Exzenter lagert, ein Nadellager, insbesondere ein zweireihiges Nadellager.

Um eine dauerhaft exakte Rückstellung des Wälzlagers bzw. seines oder seiner Käfige in die definierte Ausgangslage zu gewährleisten, ist die den radialen Fortsatz aufweisende Lagerschale am Exzenter festgelegt. Bevorzugt ist die Lagerschale am Exzenter gegen eine Verschiebung in Axialrichtung und gegen eine Verdrehung um die Querachse des Exzenters durch Formschluß gesichert.

Bei einer besonders bevorzugten Ausführungsform der erfindungsgemäßen Zuspannvorrichtung erfolgt sowohl die Sicherung der Lagerschale gegen eine Verschiebung in Axialrichtung als auch die Sicherung der Lagerschale gegen Verdrehen mittels einer exzenterseitigen Ausprägung der Lagerschale, die sich in eine insbesondere sacklochförmige Ausnehmung im Exzenter erstreckt. Die Ausprägung wird durch Einwirkung eines geeigneten Prägewerkzeugs auf die Innenseite der Lagerschale des Wälzkörpers hergestellt.

Bei bevorzugten Ausführungsformen der erfindungsgemäßen Zuspannvorrichtung ist der radiale Fortsatz der Lagerschale einstückig mit dieser ausgebildet, beispielsweise durch eine einstückig mit der Lagerschale verbundene Lasche. Sind mehrere radiale Fortsätze an einer Lagerschale vorhanden, dann sind bevorzugt alle diese Fortsätze einstückig mit der Lagerschale ausgebildet. Die Lagerschale läßt sich beispielsweise aus einem handelsüblichen beschichteten Blech durch Ausstanzen und Umformen einschließlich des oder der radialen Fortsätze leicht herstellen.

Um den mittels der Lagerschale am Exzenter gelagerten Wälzkörper gegen eine axiale Verschiebung zu sichern, hat die Lagerschale bevorzugt einen oder mehrere sich vom stirnseitigen Rand der Lagerschale radial nach innen erstreckende Vorsprünge. Ebenso wie der oder die sich radial nach außen erstreckenden Fortsätze der Lagerschale können auch die sich vom stirnseitigen Rand radial nach innen erstreckenden Vorsprünge einstückig mit der Lagerschale ausgebildet sein, beispielsweise durch je eine umgebogene Blechlasche.

Auch die Lagerschale des Wälzkörpers ist im wesentlichen hohlzylindersektorförmig und erstreckt sich über einen Bereich von mehr als 180°, jedoch weniger als etwa 200°. Dadurch wird erreicht, daß sich der Wälzkörper bei seiner Montage leicht in die Lagerschale drücken läßt und danach nicht ohne weiteres wieder aus der Lagerschale herausfällt.

Ein Ausführungsbeispiel der Erfindung wird im folgenden anhand schematischer Zeichnungen näher erläutert. Es zeigt:
- Fig.1: eine teilweise geschnitten dargestellte Draufsicht einer Scheibenbremse mit erfindungsgemäßer Zuspannvorrichtung,
- Fig.2: einen Querschnitt der Zuspannvorrichtung aus Fig.1,
- Fig.3: einen Teil der Fig.2 in vergrößerter Darstellung,
- Fig.4: die Ansicht IV aus Fig.3, und
- Fig.5: den Schnitt V-V aus Fig.4.

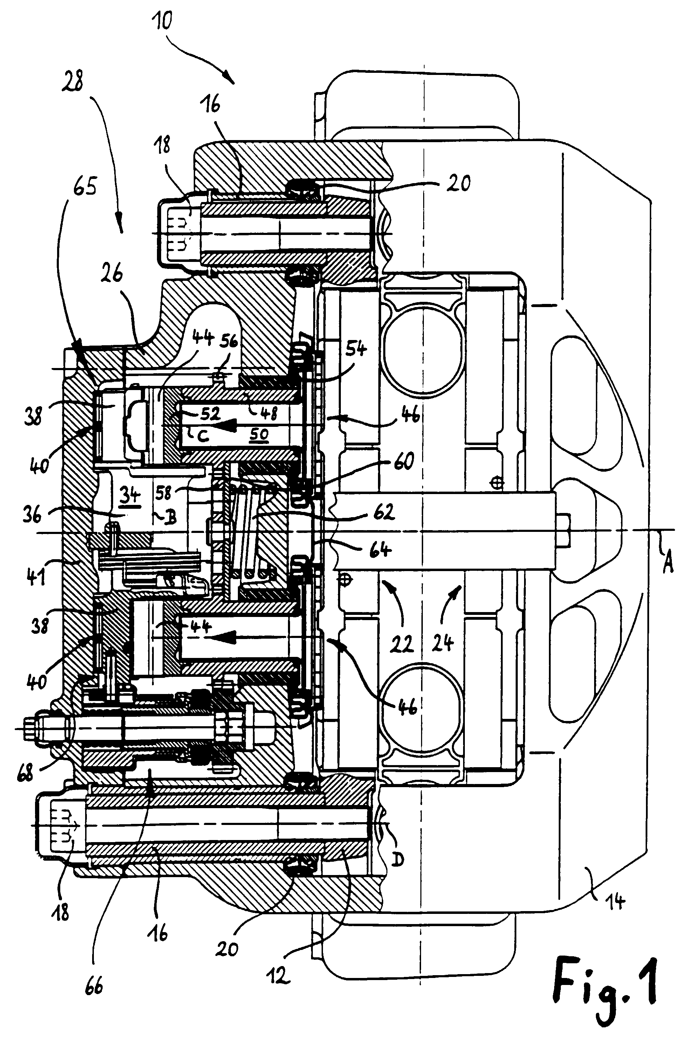

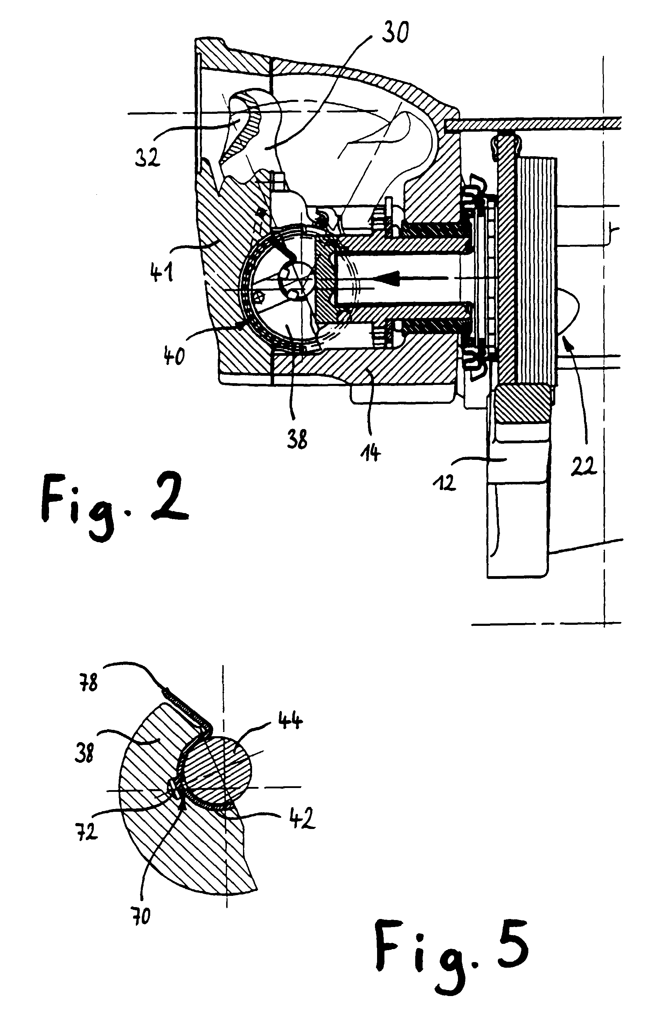

Die in den Figuren 1 und 2 dargestellte Teilbelagscheibenbremse 10 ist einer hier nicht gezeigten, um eine Bremsscheibenachse A drehbaren Bremsscheibe zugeordnet und hat einen Bremsträger 12, an dem ein Schwimmrahmen 14 parallel zur Achse A verschiebbar geführt ist. Als Führungen dienen zwei Büchsen 16, die mit je einer Innensechskantschraube 18 am Bremsträger 12 befestigt und durch Faltenbälge 20 vor Verschmutzung geschützt sind. Der Schwimmrahmen 14 umgreift zwei Bremsbeläge 22 und 24, die an je eine Seite der nicht dargestellten Bremsscheibe anlegbar sind und die wie üblich je eine Belagrückenplatte aufweisen, auf deren bremsscheibenzugewandter Seite je eine Schicht aus Reibmaterial befestigt ist.

Zum Betätigen der Scheibenbremse 10 ist eine in einem Gehäuse 26 angeordnete Zuspannvorrichtung 28 vorhanden, die ein hebelartiges Betätigungsglied 30 (sh. Fig.2) umfaßt. Das Betätigungsglied 30 ist an seinem freien Ende mit einer Mulde 32 versehen, in die zur Bremsbetätigung ein hier nicht dargestelltes stangen- bzw. stößelförmiges Ausgangsglied eingreift, um das Betätigungsglied 30 bezüglich Fig.2 im Uhrzeigersinn zu verschwenken. Das Ausgangsglied kann beispielsweise Bestandteil eines herkömmlichen und daher hier nicht näher erläuterten Druckluft-Membranzylinders sein.

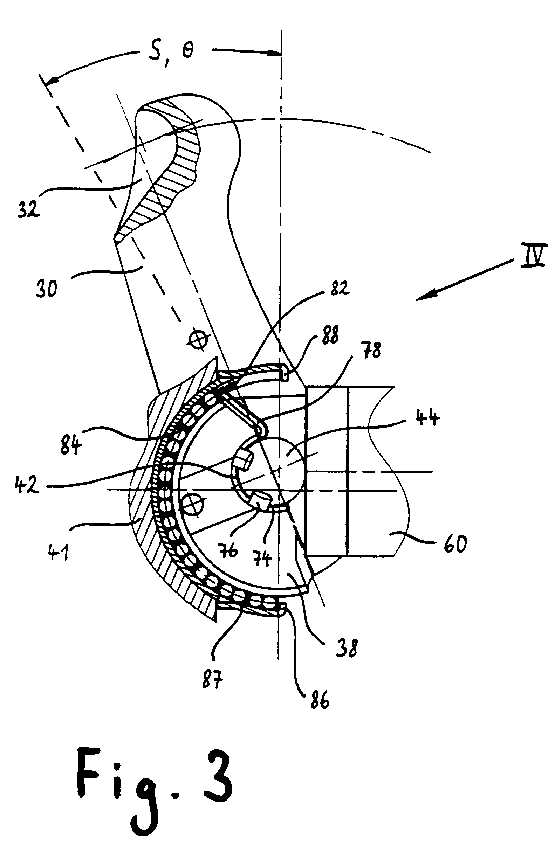

Das hebelartige Betätigungsglied 30 ist einstückig mit einem im Gehäuse 26 der Zuspannvorrichtung 28 angeordneten Drehkörper 34 ausgebildet, der um eine die Bremsscheibenachse A rechtwinklig kreuzende Querachse B drehbar ist. Der Drehkörper 34 hat ein Mittelteil 36 zwischen zwei Exzentern 38, die mit je einem zylindersektor- oder schalenförmigen Wälzlager 40 im Deckel 41 des Gehäuses 26 gelagert sind. Jedes Wälzlager 40 ist als zweireihiges Nadellager ausgeführt. An jedem der beiden Exzenter 38 ist mittels einer Lagerschale 42 (sh. Fig.3 bis Fig.5) ein Wälzkörper 44 gelagert, dessen Achse sich parallel zur Querachse B erstreckt.

Den beiden Exzentern 38 ist je einer von zwei Stößeln 46 zugeordnet, die je eine zur Bremsscheibenachse A parallele, die Querachse B rechtwinklig schneidende Stößelachse C aufweisen und symmetrisch in Bezug auf eine die Bremsscheibenachse A enthaltende, zur Querachse B normale Mittelebene der Zuspannvorrichtung 28 angeordnet sind. Die beiden Stößel 46 sind aus je einem hülsenförmigen Stößelteil 48, einem bolzenförmigen Stößelteil 50 und einer Kappe 52 zusammengesetzt. Die beiden hülsenförmigen Stößelteile 48 sind in je einer in das Gehäuse 26 eingepreßten Gleitbüchse 54 längs ihrer Stößelachse C verschiebbar und um diese drehbar gelagert und haben je ein Innengewinde, mit dem sie auf ein komplementäres Außengewinde des zugehörigen bolzenförmigen Stößelteils 50 aufgeschraubt sind. Die beiden Kappen 52 sind in das zugehörige hülsenförmige Stößelteil 48 mit Spiel gefügt und haben je eine von diesem abgewandte, zur Stößelachse C normale ebene Stirnfläche, auf welcher der zugehörige Wälzkörper 44 abwälzbar ist.

Die beiden hülsenförmigen Stößelteile 48 tragen je einen an ihnen befestigten Zahnkranz 56, der mit einem Zahnrad 58 kämmt. Das Zahnrad 58 ist um eine zu den Stößelachsen C parallele Achse drehbar an einer zentralen Platte 60 gelagert, die sich an den beiden Zahnkränzen 56 axial abstützt und von einer Rückstellfeder 62 belastet ist. Diese ist zwischen der zentralen Platte 60 und dem Gehäuse 26 derart mit Vorspannung eingebaut, daß sie die beiden Stößel 46 ständig über ihre Kappen 52 an den Wälzkörpern 44 anliegend hält. Die beiden bolzenförmigen Stößelteile 50 ragen aus den hülsenförmigen Stößelteilen 48 und den Gleitbüchsen 54 axial heraus, haben dort einen wesentlich vergrößerten Durchmesser und sind durch eine dünne Metallplatte 64, die zugleich als Hitzeschild dient, derart miteinander verbunden, daß sie sich nicht drehen können. Der soeben beschriebene Teil der Zuspannvorrichtung 28 bildet eine allgemein mit 65 bezeichnete Betätigungsanordnung.

Die dargestellte Zuspannvorrichtung 28 ist ferner mit einer allgemein mit 66 bezeichneten Nachstellvorrichtung ausgerüstet, deren Mittelachse D parallel zu den Stößelachsen C angeordnet ist. Die Nachstellvorrichtung 66 dient dazu, das sich während des Betriebs durch Verschleiß des auf den Bremsbelägen 22, 24 befestigten Reibmaterials vergrößernde Bremslüftspiel, d.h. den Abstand zwischen jedem Bremsbelag und der Bremsscheibe bei unbetätigter Bremse, automatisch wieder auf seinen ursprünglichen Wert zurückzuführen. Hierzu ist die Nachstellvorrichtung 66, die sich wie die beiden Exzenter 38 am Gehäusedeckel 41 der Zuspannvorrichtung 28 abstützt, durch einen Winkeltrieb 68 mit dem Drehkörper 34 verbunden. Der spezielle Aufbau der Nachstellvorrichtung 66 und des diese mit der Betätigungsanordnung 65 verbindenden Winkeltriebs 68 spielt im Rahmen der hier beschriebenen Erfindung keine besondere Rolle und wird deshalb nicht näher erläutert.

Beim Betätigen der Bremse 10 wird die durch das Verschwenken des Betätigungsgliedes 30 hervorgerufene Drehung des Drehkörpers 34 über die beiden Exzenter 38 in eine Translationsbewegung der beiden Stößel 46 umgesetzt, wodurch der Bremsbelag 22 gegen die nicht dargestellte Bremsscheibe gepreßt wird. Da jeder der beiden Exzenter 38 sich über sein Wälzlager 40 am Gehäusedeckel 41 abstützt, wird die Reaktionskraft, die entsteht, sobald der Bremsbelag 22 an der Bremsscheibe anliegt und gegen diese gepreßt wird, über den Gehäusedeckel 41 auf das Gehäuse 26 bzw. den Schwimmrahmen 14 übertragen und führt dazu, daß sich der Schwimmrahmen 14 auf seinen Büchsen 16 gleitend verschiebt, wodurch auch der Bremsbelag 24 gegen die Bremsscheibe gedrückt wird.

Unter Bezugnahme auf Fig.2 bis Fig.5 wird nun die Lagerung der Wälzkörper 44 sowie der Exzenter 38 näher beschrieben. Jede Lagerschale 42, die im gezeigten Ausführungsbeispiel aus einem handelsüblichen, beschichteten Blech durch Ausstanzen und Umformen hergestellt ist, ist am zugehörigen Exzenter 38 mittels einer Ausprägung 70 fixiert, die an der exzenterseitigen Außenfläche der Lagerschale 42 hervorspringt und in ein im Exzenter ausgebildetes Sackloch 72 formschlüssig eingreift. Die Ausprägung 70 sichert somit die Lagerschale 42 sowohl gegen eine Verschiebung in Axialrichtung, d.h. achsparallel zur Querachse B, als auch gegen ein Verdrehen in Umfangsrichtung. Jede Lagerschale 42 ist im wesentlichen hohlzylindersektorförmig und erstreckt sich über einen Bereich von etwa 200°. Der zylinderförmige Wälzkörper 44 läßt sich so noch einfacher in die Lagerschale 42 drücken und wird aufgrund der Erstreckung der Lagerschale über mehr als 180° gut in der Lagerschale 42 festgehalten.

Damit sich der in der Lagerschale 42 gelagerte zylindrische Wälzkörper 44 nicht in Richtung der Querachse B nach außen verschieben kann, sind am stirnseitigen Rand 74 der Lagerschale 42 mehrere sich radial nach innen erstreckende Vorsprünge 76 vorhanden, die einstückig mit der Lagerschale 42 ausgebildet sind. Gegen eine Verschiebung axial nach innen, also zur Mittelebene der Zuspannvorrichtung 28 hin, sind die beiden Wälzkörper 44 durch das Mittelteil 36 des Drehkörpers 34 gehindert.

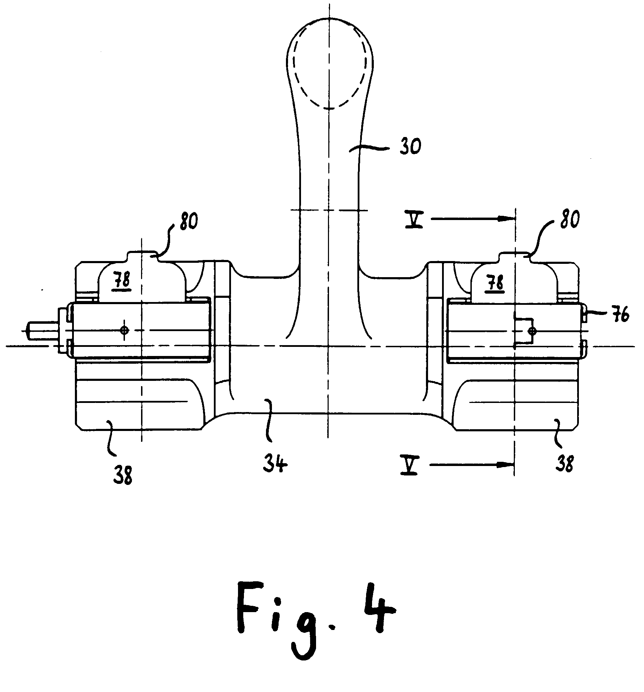

Zur Rückstellung des den Exzenter 38 lagernden Wälzlagers 40 hat jede Lagerschale 42 einen sich radial nach außen erstreckenden Fortsatz 78, der ebenfalls einstückig mit der Lagerschale 42 ausgebildet ist und der sich an seinem freien Ende bei 80 verjüngt, um beim Zurückdrehen des Exzenters 38, d.h. beim Lösen der Bremse, mit der benachbarten freien Längskante 82 des Wälzlagerkäfigs 84 in Eingriff treten zu können. Der verjüngte Teil 80 des Fortsatzes 78 der Lagerschale 42 ist dabei so breit, daß er, wie aus Fig.4 ersichtlich ist, mit beiden Wälzlagerkäfigen 84 des Wälzlagers 40 zur Rückstellung derselben in Eingriff treten kann.

Wie insbesondere aus Fig.3 bis Fig.5 ersichtlich ist, kann jeder Fortsatz 78 mit seinem verjüngten Teil 80 beim Zurückschwenken des Drehkörpers 34 und der mit diesem einstückig verbundenen, beiden Exzenter 38 gegen die freien Längskanten 82 der beiden Wälzlagerkäfige 84 jedes Wälzlagers 40 drücken, wodurch diese zwangsweise in ihre Ausgangslage mit zurückgenommen werden. Die Ausgangslage jedes Wälzlagerkäfigs 84 wird durch den freien Drehwinkel e bestimmt, der sich bei völlig gelöster Bremse zwischen dem oberen Anschlag 88 der Wälzlagerschale 87 und dem Fortsatz 78 der Lagerschale 42 ergibt (sh. Fig.3). Dabei ist zu berücksichtigen, daß zwischen dem unteren Anschlag 86 der Wälzlagerschale 87 und dem Wälzlagerkäfig 84 in der Ausgangslage ein kleines Spiel vorhanden sein sollte, um zu vermeiden, daß beim Rückstellen des Wälzlagerkäfigs 84 erhöhter Druck auf diesen ausgeübt wird. Aus der so definierten Ausgangslage steht bei einer erneuten Betätigung der Bremse durch Verschwenken des Betätigungsglieds 30 im Uhrzeigersinn somit die volle mit S bezeichnete Strecke zwischen der freien Längskante 82 und einem oberen Anschlag 88 der Wälzlagerschale 87 zur Verschiebung der Wälzlagerkäfige 84 zur Verfügung. Der Drehwinkel Θ, der während des Durchlaufens der Strecke S überfahren wird, entspricht dabei etwa der Hälfte des Schwenkwinkels, um den das Betätigungsglied 30 und damit der Drehkörper 34 bei einer Betätigung mit maximaler Betätigungskraft gedreht werden (sh. auch Fig.2).

## Patentansprüche

1. Zuspannvorrichtung (28) einer Scheibenbremse (10), insbesondere Schwimmsattel- oder Schwimmrahmen-Teilbelagscheibenbremse für Lastkraftwagen oder Omnibusse, mit
- mindestens einem Stößel (46), der in Richtung einer Stößelachse (C) verschiebbar ist, um einen Bremsbelag (22) an eine Bremsscheibe anzulegen,
- mindestens einem Exzenter (38), der zur Bremsbetätigung um eine Querachse (B) drehbar und in mindestens einem Wälzlager (40) gelagert ist, und
- einem am Exzenter (38) mittels einer Lagerschale (42) gelagerten Wälzkörper (44) zum Übertragen von Betätigungskräften auf den Stößel (46),
dadurch gekennzeichnet, daß
die Lagerschale (42) einen sich bezüglich der Querachse (B) zumindest annähernd radial nach außen erstreckenden Fortsatz (78) aufweist, der für einen Eingriff mit einem Käfig (84) des Wälzlagers (40) ausgebildet ist und den Käfig (84) beim Lösen der Bremse in eine definierte Ausgangslage zurückstellen kann.

2. Zuspannvorrichtung nach Anspruch 1, dadurch gekennzeichnet, daß der sich radial erstreckende Fortsatz (78) der Lagerschale (42) des Wälzkörpers (44) für einen Eingriff mit mehreren nebeneinander angeordneten Käfigen (84) des Wälzlagers (40) ausgebildet ist.

3. Zuspannvorrichtung nach Anspruch 1 oder 2, dadurch gekennzeichnet, daß das Wälzlager (40) zylindersektorförmig ist, und der Fortsatz (78) beim Lösen der Bremse mit einer freien Längskante (82) des Wälzlagerkäfigs (84) in Eingriff tritt.

4. Zuspannvorrichtung nach einem der Ansprüche 1 bis 3, dadurch gekennzeichnet, daß das Wälzlager (40) ein Nadellager, insbesondere ein zweireihiges Nadellager ist.

5. Zuspannvorrichtung nach einem der vorhergehenden Ansprüche, dadurch gekennzeichnet, daß die Lagerschale (42) des Wälzkörpers (44) am Exzenter (38) formschlüssig gegen eine Verschiebung gesichert ist.

6. Zuspannvorrichtung nach einem der vorhergehenden Ansprüche, dadurch gekennzeichnet, daß die Lagerschale (42) des Wälzkörpers (44) am Exzenter (38) formschlüssig gegen eine Verdrehung um die Querachse (B) gesichert ist.

7. Zuspannvorrichtung nach Anspruch 5 und 6, dadurch gekennzeichnet, daß die Sicherung der Lagerschale (42) gegen eine Verschiebung in Axialrichtung und deren Verdrehsicherung mittels einer exzenterseitigen Ausprägung (70) der Lagerschale (42) erreicht ist, die sich in eine insbesondere sacklochförmige Ausnehmung (72) im Exzenter (38) erstreckt.

8. Zuspannvorrichtung nach einem der vorhergehenden Ansprüche, dadurch gekennzeichnet, daß die Lagerschale (42) des Wälzkörpers (44) einen oder mehrere sich vom stirnseitigen Rand (74) der Lagerschale radial nach innen erstreckende Vorsprünge (76) aufweist, die den Wälzkörper (44) gegen eine axiale Verschiebung sichern.

9. Zuspannvorrichtung nach Anspruch 8, dadurch gekennzeichnet, daß jeder Vorsprung (76) durch eine einstückig mit der Lagerschale (42) verbundene Lasche gebildet ist.

10. Zuspannvorrichtung nach einem der vorhergehenden Ansprüche, dadurch gekennzeichnet, daß die Lagerschale (42) des Wälzkörpers (44) im wesentlichen hohlzylindersektorförmig ist und sich über einen Bereich von mehr als 180° und weniger als etwa 200° erstreckt.

## Claims

1. A clamping devide (28) of a disc brake (10), in particular a sliding caliper spot-type disc brake or a reaction beam spot-type disc brake for trucks or buses, comprising
- at least one plunger (46) which is movable in the direction of a plunger axis (C) in order to apply a brake lining (22) to a brake disc;
- at least one eccentric (38) which is rotatable about a transverse axis (B) for the actuation of the brake and is supported in at least one roller bearing (40); and
- a rolling body (44) which is supported at the eccentric (38) by means of a bearing shell (42) for the transmission of actuation forces to the plunger (46),
characterized in that
the bearing shell (42) comprises an extension (78) which, relative to the transverse axis (B), projects at least approximately radially outwards and is adapted for engagement with a cage (84) of the roller bearing (40) and which can return the cage (84) into a defined initial position upon release of the brake.

2. A clamping device according to Claim 1, characterized in that the radially extending extension (78) of the bearing shell (42) of the rolling body (44) is designed for an engagement with several cages (84) of the roller bearing (40) arranged adjacent to each other.

3. A clamping device according to Claim 1 or 2, characterized in that the roller bearing (40) is of a cylinder sector shape and the extension (78) comes into engagement with a free longitudinal edge (82) of the roller bearing cage (84) upon release of the brake.

4. A clamping device according to one of Claims 1 to 3, characterized in that the roller bearing (40) is a needle bearing, particularly a two-row needle bearing.

5. A clamping device according to one of the previous claims, characterized in that the bearing shell (42) of the rolling body (44) is positively secured at the eccentric (38) against displacement.

6. A clamping device according to one of the previous claims, characterized in that the bearing shell (42) of the rolling body (44) is positively secured at the eccentric (38) against rotation about the transverse axis (B).

7. A clamping device according to Claims 5 and 6, characterized in that securing of the bearing shell (42) against displacement in an axial direction and aginst rotation is achieved by means of an embossment (70) of the bearing shell (42) on the eccentric side, which extends into a preferably blind hole shaped recess (72) in the eccentric (38).

8. A clamping device according to one of the previous claims, characterized in that the bearing shell (42) of the rolling body (44) comprises one or several projections (76) which extend radially inwards from the face end edge (74) of the bearing shell and secure the rolling bodies (44) against an exial displacement.

9. A clamping device according to Claim 8, characterized in that each projection (76) is formed by a lug which is integrally connected with the bearing shell (42).

10. A clamping device according to one of the previous claims, characterized in that the bearing shell (42) of the rolling body (44) has an essentially hollow cylinder sector shape and covers a range between more than 180° and less than 200°.

## Revendications

1. Dispositif de serrage (28) d'un frein à disque (10), en particulier un frein à disque à étrier flottant ou à garniture partielle à étrier flottant pour véhicules utilitaires ou autocars, comprenant
- au moins un poussoir (46) qui peut coulisser dans la direction d'un axe de poussoir (C) pour appliquer une garniture de frein (22) contre un disque de frein,
- au moins un excentrique (38) qui est monté tournant autour d'un axe transversal (B) dans au moins un palier à roulement (40) pour actionner le frein, et
- un corps de roulement (44) monté sur l'excentrique (38) au moyen d'une coquille de coussinet (42) pour la transmission de forces d'actionnement sur le poussoir (46),
caractérisé en ce que
la coquille de coussinet (42) présente un prolongement (78) s'étendant au moins approximativement radialement vers l'extérieur par rapport à l'axe transversal (B), conformé pour un engrènement avec une cage (84) du palier à roulement (40) et peut ramener la cage (84) dans une position de repos définie lors du desserrage du frein.

2. Dispositif de serrage selon la revendication 1, caractérisé en ce que le prolongement (78) s'étendant radialement de la coquille de coussinet (42) du corps de roulement (44) est conformé pour un engrènement avec plusieurs cages (84) disposées l'une à côté de l'autre du palier à roulement (40).

3. Dispositif de serrage selon la revendication 1 ou 2, caractérisé en ce que le palier à roulement (40) est en forme de secteur cylindrique et le prolongement (78) engrène avec une bord longitudinal libre (82) de la cage (84) du palier à roulement lors du desserrage du frein.

4. Dispositif de serrage selon l'une quelconque des revendications 1 à 3, caractérisé en ce que le palier à roulement (40) est un roulement à aiguilles, en particulier un roulement à aiguilles à deux rangées d'aiguilles.

5. Dispositif de serrage selon l'une quelconque des revendications précédentes, caractérisé en ce que la coquille de coussinet (42) du corps de roulement (44) est fixée par engagement mécanique de formes à l'excentrique (38) pour l'empêcher de se déplacer en translation.

6. Dispositif de serrage selon l'une quelconque des revendications précédentes, caractérisé en ce que la coquille de coussinet (42) du corps de roulement (44) est fixée par engagement mécanique de formes à l'excentrique (38) pour l'empêcher de tourner autour de l'axe transversal (B).

7. Dispositif de serrage selon la revendication 5 ou 6, caractérisé en ce que l'immobilisation en translation dans la direction axiale de la coquille de palier (42) et son immobilisation en rotation est obtenue au moyen d'une excroissance (70) du côté de l'excentrique de la coquille de coussinet (42), qui s'étend dans un creux (72) en particulier en forme de trou borgne dans l'excentrique (38).

8. Dispositif de serrage selon l'une quelconque des revendications précédentes, caractérisé en ce que la coquille de coussinet (42) du corps de roulement (44) présente une ou plusieurs parties en saillie (76) s'étendant radialement vers l'intérieur à partir du bord frontal (74) de la coquille de coussinet, qui empêchent une translation axiale du corps de roulement (44).

9. Dispositif de serrage selon la revendication 8, caractérisé en ce que chaque partie en saillie (76) est formée d'une languette d'une seule pièce avec la coquille de coussinet (42).

10. Dispositif de serrage selon l'une quelconque des revendications précédentes, caractérisé en ce que la coquille de coussinet (42) du corps de roulement (44) est principalement en forme de secteur cylindrique creux et s'étend sur une zone de plus de 180 ° et de moins de 200 °.
